# FASCICULE DE BREVET EUROPEEN

(11) **EP 0 847 406 B1**
(45) Date de publication et mention de la délivrance du brevet: **29.11.2000**
(21) Numéro de dépôt: 96928292.0
(22) Date de dépôt: 28.08.1996
(51) Int. Cl.: C08F 8/44

(54) **PROCEDE DE PREPARATION D'IONOMERES EN POUDRE ET LEUR UTILISATION COMME COUCHE DE PROTECTION DE PRODUITS DE REVETEMENT DE SOLS ET DE MURS**
VERFAHREN ZUR HERSTELLUNG VON IONOMEREN IN PULVER FORM UND IHRE VERWENDUNG ALS SCHUTZSCHICHT VON BODEN- UND WANDBELÄGEN
PROCESS FOR PREPARING POWDERY IONOMERS AND THEIR USE AS A PROTECTIVE COATING FOR GROUND AND WALL-COVERING PRODUCTS

(30) Priorité: 01.09.1995 EP 95870101
(43) Date de publication de la demande: 17.06.1998
(73) Titulaire: Tarkett Sommer S.A., 92748 Nanterre Cedex (FR)
(72) Inventeur: ROUSSEL, Albert, L-9514 Wiltz (LU); SICHE, Alexandre, F-34400 Saint-Christol (FR)
(74) Mandataire: Van Malderen, Joelle
(86) Numéro de dépôt international: BE9600091
(87) Numéro de publication internationale: WO9709358

(56) Documents cités:
- WO-A-95/11333
- US-A- 3 755 219

## Description

### Objet de l'invention.

La présente invention porte sur un procédé de préparation d'ionomères en poudre.

Elle s'étend à l'utilisation d'ionomères en poudre obtenus par ce procédé pour la protection de produits de revêtement de sols ou de murs.

### Arrière-plan technologique.

Les revêtements de sols ou de murs sont réalisés essentiellement à base d'homopolymères ou de copolymères de chlorure de vinyle. En plus de ses caractéristiques physiques et mécaniques, l'utilisation du PVC est intéressante du fait de sa facilité et de sa diversité de mise en oeuvre, notamment par :
- calandrage ou extrusion pour la fabrication de feuilles,
- enduction de plastisol.

L'inclusion d'agent gonflant dans les formulations permet l'obtention de mousses. Celles-ci peuvent être inhibées par impression localisée pour obtenir des effets de relief.

Actuellement cependant, pour des raisons liées à la protection de l'environnement, des recherches sont menées pour tenter de remplacer le PVC par des polymères ne contenant ni chlore, ni azote.

Les brevets DE-39 03 670 C1 et DE-39 03 669 C1 décrivent la fabrication de revêtements de sols ou de murs à partir de PMMA plastifié par calandrage ou enduction de plastisols.

Ces produits contiennent un taux élevé de plastifiants et peuvent donc présenter des inconvénients résultant de leur migration et de leur volatilité. De plus, les composés acryliques sont des polymères relativement coûteux.

Dans la demande de brevet BE-09300955, on décrit la fabrication d'un revêtement de sol sur mousse EVA par calandrage ou extrusion et recouvert d'une feuille d'un composé dit ionomère, extrudée comme couche d'usure. Ce type de couche d'usure, par suite de ses excellentes propriétés (transparence, résistance à l'abrasion, à la rayure et aux taches), est jugé particulièrement intéressant.

La fabrication d'ionomères est quant à elle décrite dans le document "Ionic Polymers", Encyclopedia of Polymer Science and Engineering, Wiley-Interscience, Volume 8 (1987), pp. 393-423.

L'élaboration d'un ionomère se fait généralement en deux étapes : la fabrication d'un précurseur, puis sa neutralisation par un sel métallique.

Pour obtenir le précurseur, des polymères ioniques sont habituellement préparés par copolymérisation d'un monomère fonctionnalisé et d'un monomère oléfinique ou par fonctionnalisation directe d'un polymère déjà existant. Typiquement, la présence de groupe carboxyle est obtenue par copolymérisation de l'acide acrylique ou méthacrylique avec l'éthylène, le styrène ou d'autres monomères. Le copolymère résultant comporte des fonctions acides libres, lesquelles peuvent être neutralisées à un degré désiré par des hydroxydes métalliques, des acétates métalliques ou des sels.

La seconde étape consiste en la neutralisation des groupes acides. Plusieurs voies peuvent être utilisées :

Dans la réaction en solution, il s'agit de mettre le copolymère en solution, puis de neutraliser en solution, le précipiter, le laver et enfin le sécher. L'ionomère obtenu est alors stocké avec des dessiccateurs pour éviter toute reprise d'humidité.

Cette méthode d'obtention est décrite dans la littérature, par exemple : "Ionomers : the sodium salt of Poly(ethylene-co-Methacrylic Acid)", Keling Han and H. Leverne Williams, Journal of Applied Polymer Science, Vol. 38, pp. 73-86 (1989), et le brevet US-5,003,012.

La réaction de neutralisation en extrusion s'effectue dans la filière d'extrusion lors de la fusion des produits. Les températures réalisées dans la filière sont de l'ordre de 180 °C à 260 °C, et même quelquefois supérieures. Les sources de cations pouvant être utilisées sont notamment Na₂CO₃, K₂CO₃, Mg(OH)₂, ZnO, Cu(CH₃COO)₂.

Lors de cette réaction, des produits volatils sont éliminés dans une chambre de dégazage sur la filière. Cette étape de dégazage est très délicate, car avec des précurseurs d'ionomère d'indice de fluidité élevé, c'est le produit qui s'échappe. Cette technique restreint alors la fabrication d'ionomère à partir des précurseurs présentant une valeur de Melt Index pas trop élevée.

De plus, cette technique engendre des contacts de matière en fusion avec des surfaces métalliques. Du fait de leur composition chimique (présence de sites acides), ces produits sont corrosifs, et il est nécessaire de travailler avec des surfaces métalliques ayant subi un traitement anticorrosion. Si ce n'est pas le cas, l'ionomère provoque l'abrasion des appareils de transformations par corrosion. Dans cette technique, il est aussi nécessaire de limiter l'humidité, car la synergie entre acide, eau et température élevée favorise la corrosion.

Cette technique d'obtention est décrite dans le brevet EP-0 537 487 A1.

Il est possible de neutraliser un film de précurseur par immersion, en le plongeant dans une solution de neutralisation pendant un certain temps. Le degré de neutralisation est alors ajusté par le temps de présence dans la solution. Cette technique est suivie elle aussi d'une période de séchage afin de supprimer toute l'humidité.

Une illustration de cette technique est donnée à travers la publication "Dynamic Mechanical Studies of Partially Ionized and Neutralized Nafion Polymers", Thein Kyu, Mitsuaki Hashiyama and Adi Eisenberg, Can. J. Chem. 61, 680 (1983).

Ces différentes techniques, et notamment la seconde, permettent d'obtenir des films ionomères. Leur bon comportement en résistance à l'abrasion, aux rayures, taches, ainsi que leur transparence permettent leur utilisation comme couche d'usure dans les produits de revêtement de sols. Cependant, on observe des difficultés d'adhérence avec les sous-couches ou le support, et surtout des problèmes de collage sur les parties métalliques des outils de complexage. En effet, à cause de leur composition chimique, le travail de ces films par des outils chauds (cylindre) entraîne des collages. On parle alors de "Hot Tack". Concernant les problèmes d'adhérence, les solutions envisagées à ce jour sont principalement l'application de tels films à l'aide d'agents du type "Hot-Melt" ou d'enduction de colles. Ces solutions ont fait l'objet des demandes de brevet publiées WO95/11333 et WO95/08593.

Une solution pour contourner les inconvénients de mise en oeuvre et principalement de "Hot Tack" est la mise en oeuvre des ionomères sous forme de poudres d'ionomères. Ce choix permettrait d'éviter les problèmes de collage sur cylindre tout en obtenant à la fusion un film transparent comme couche d'usure. Cependant, de par sa composition chimique (présence de liaison ionique), un ionomère possède une énergie de cohésion beaucoup plus importante que le précurseur (liaison hydrogène), ce qui le rend très difficile à broyer. Un broyage cryogénique est alors nécessaire, mais cette technique est très onéreuse, et reste très délicate à cause du bon comportement à froid de l'ionomère. De plus, l'utilisation de poudres obtenues par ces techniques ne possède pas que des avantages, car les risques d'explosion augmentent avec la finesse de la poudre. En effet, il y a accumulation de charges électriques et les risques d'étincelles sont alors accrus. Des précautions doivent dès lors être envisagées.

On a déjà proposé de produire des résines d'ionomères par la technique du mélange de deux poudres sèches.

Selon le document DATABASE WPI, Section Ch, Week 8651; Derwent Publications Ltd., London, G3; Class A18, AN 86-336142 et JP-A-61 252 204 (MITSUBISHI PETROCH KK), 10 Novembre 1986, on propose de réaliser une dispersion homogène de copolymères alpha-oléfinique contenant des acides carboxyliques à insaturation α-β et au moins un agent de réticulation en poudre choisi parmi les hydroxydes de métaux des groupes IIa et IIb suivi d'un malaxage à l'état fondu. Cette technique évite le recours à des malaxeurs traités contre la corrosion.

Selon le document US-A-4,638,034 des copolymères éthylène-acide acrylique ou leurs sels sont saponifiés à l'état fondu en l'absence de solvants ou d'eau, autre que le sous-produit alkanol. On cherche également à éviter la corrosion des installations.

Selon le document US-A-5,036,134 un précurseur d'ionomère du type styrène-acrylate et un sel organique de zinc sont broyés à sec et ensuite mélangés à l'état fondu dans un mélangeur Brabender, refroidi à l'eau. On utilise le produit comme liant dans des peintures.

Finalement, le document US-A-3,755,219 propose mélanger par une agitation vigoureuse un hétéropolymère essentiellement sec de styrène-anhydride maléique, maléate de méthyle avec une solution d'hydroxyde de sodium.

Selon une variante, un copolymère sec styrène-anhydride maléique est mélangé vigoureusement et neutralisé par de l'ammoniac gazeux.

Les interpolymères obtenus sont utilisés comme liants de pigments ou adhésifs pour le revêtement par des pigments de papier, de carton ou de matières similaires, en conjonction avec des amidons ou matières protéiques de couchage du papier.

### Buts visés par la présente invention.

L'invention vise à fournir un procédé d'obtention d'ionomères permettant de s'affranchir ou de réduire des problèmes inhérents aux propositions de l'état de la technique, en particulier :
- collage à chaud sur surfaces métalliques,
- corrosion des outils de transformation,
- dégazage,
- broyage,
- sécurité,
- choix limité du précurseur, eu égard aux valeurs du Melt Index acceptables.

A titre complémentaire, on vise un procédé permettant de modifier facilement les caractéristiques du film obtenu en fonction des exigences du produit fini.

### Brève description du dessin

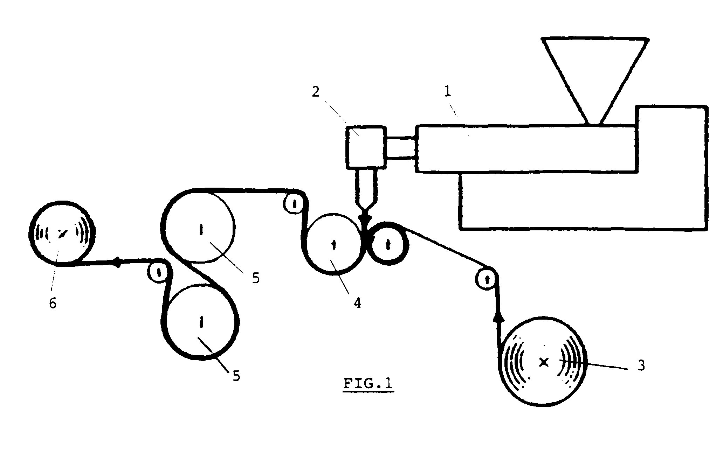

- La figure 1: représente schématiquement une technique d'extrusion-couchage de mise en oeuvre des ionomères de l'invention pour produire des revêtements de sol.

### Eléments caractéristiques de l'invention.

La présente invention vise à développer un procédé nouveau pour la fabrication d'ionomères en poudre, ces types d'ionomères convenant particulièrement pour l'utilisation en couche d'usure de produits de revêtement de sols et de murs.

L'invention concerne un procédé de préparation d'ionomères en poudre comportant la neutralisation d'un précurseur en poudre par un agent de neutralisation, caractérisé en ce que la neutralisation s'effectue en ajoutant de manière dosée une quantité définie de solution d'agent de neutralisation dans un mélangeur rapide en conservant essentiellement le caractère de poudre sèche.

L'avantage essentiel de cette technique est le fait que le produit de départ en poudre est le précurseur dont on peut maîtriser assez aisément les propriétés, notamment les propriétés granulométriques, alors que l'ionomère à proprement parler, pour les raisons invoquées, ne permet cette maîtrise que très difficilement.

De préférence, la solution de neutralisation se trouve à des concentrations proches de la saturation. Après quelques minutes de mélange, la poudre de précurseur d'ionomère neutralisée retrouve ses caractéristiques initiales (granulométrie, écoulement, ...) bien qu'elle puise contenir une certaine quantité d'eau (de l'ordre de 10%).

La poudre traitée par cette technique conserve un état sec, ce qui permet d'utiliser directement les techniques de distribution propres aux poudres pour la réalisation d'un film.

La solubilité des agents de neutralisation limitera le taux de neutralisation. Cependant on peut augmenter cette solubilité en jouant sur le pH du milieu solvant qui est généralement l'eau.

La technique décrite offre une grande latitude concernant :
- les agents de neutralisation (base),
- les précurseurs,
- les techniques de transformation,
- le taux de neutralisation,
- la performance du produit.

Elle présente aussi des avantages liés à la sécurité par la diminution du risque d'explosion et surtout la maîtrise du taux de neutralisation.

Les solutions de neutralisation mises en oeuvre sont obtenues par dissolution d'un sel ou de préférence d'une base ou d'un oxyde métallique. Les bases adaptées doivent être suffisamment fortes pour permettre la neutralisation des sites acides du précurseur. Un grand choix de bases intervient alors, telles que : NaOH, KOH, Ca(OH)₂, Mg(OH)₂, Zn(OH)₂. Conviennent aussi des oxydes métalliques tels que ZnO, MgO, CaO, K₂O, des silicates comme Na₂SiO₃, ..., des carbonates comme Na₂CO₃, CaCO₃, des borates, des phosphates etc. Le taux de neutralisation dépendra de la solubilité des bases utilisées. De plus, il est possible d'effectuer des mélanges avec ces bases de manière à obtenir un ionomère neutralisé avec plusieurs cations métalliques. Cette technique de neutralisation offre donc une grande souplesse de neutralisation quant au choix des cations métalliques.

La granulométrie des poudres de précurseur est habituellement inférieure à 450 µm avec un diamètre moyen de 170 µm. Après la neutralisation la granulométrie est toujours inférieure à 450 µm mais le diamètre moyen est de 150 µm. Cette diminution est vraisemblablement due à la diminution des phénomènes électrostatiques. Le produit neutralisé n'a aucune tendance à s'agglomérer. Une granulométrie plus fine permet la fabrication de film moins épais et facilite le neutralisation du fait de l'augmentation de la surface réactionnelle.

Une condition opératoire de l'invention est le fait que la neutralisation s'effectue sur un précurseur qui se trouve sous forme de poudre. Un grand nombre de précurseurs existent sous forme de poudre ou sont broyables. On n'est cependant lié à aucun moment par des caractéristiques physiques ou chimiques limitatives présentes dans les techniques connues, notamment la viscosité qui est un facteur limitant dans le cas de réactions en extrusion.

Dans la technique connue, la nature de l'acide et le taux d'acide constituaient un facteur limitatif. En effet, la présence de sites acides est un élément gênant à cause du collage sur machine et de la corrosion qu'il induit lors de réaction en extrudeuse. La technique de neutralisation de l'invention permet d'éviter ces inconvénients et permet l'utilisation de précurseur sans limitation du taux d'acide et de la nature de l'acide.

L'utilisation d'ionomères sous forme d'une poudre permet d'éviter tout contact sur surface métallique chaude lors de la distribution et de la transformation et donc d'éviter tous les risques de collage inhérents à la composition chimique des produits. De plus, la technique de neutralisation selon l'invention qui utilise une solution aqueuse de base forte, apporte une quantité d'eau non négligeable (de l'ordre de 10%) qui, au lieu d'être un élément perturbateur, se révèle un élément favorable. L'eau permet une amélioration de la distribution par diminution des phénomènes électrostatiques. Elle agit aussi comme un élément fluidifiant (amélioration de la filmogénéité). De plus, l'eau permet en terme de sécurité une diminution des risques d'explosion par diminution de l'accumulation de charges électriques, mais aussi par dilution de l'oxygène et absorption de la chaleur.

L'utilisation de la technique de neutralisation préconisée selon l'invention offre une grande latitude vis-à-vis des taux de neutralisation. Ceci permet de s'affranchir des grades d'ionomères existants dont le degré de neutralisation du produit vendu est prédéterminé par le producteur. On peut alors conserver une plus grande latitude et une relative indépendance dans le choix des ionomères.

Un autre avantage de la technique selon l'invention est la possibilité de pouvoir effectuer des neutralisations avec plusieurs cations métalliques. Il est possible d'élaborer un ionomère neutralisé avec plusieurs types de cations afin de conjuguer leurs effets.

La technique permet donc d'obtenir des ionomères à différents taux de neutralisation avec des types de cations très variés, éventuellement en mélange comme indiqué ci-dessus.

Il est également possible d'incorporer de cette manière des additifs formés in situ, par sélection de l'anion de l'agent de neutralisation, par exemple de la silice formée à partir du silicate, tel que le silicate de sodium.

Les performances des films d'ionomères étant liées au degré de neutralisation et à la nature de l'agent de neutralisation, il est possible de fabriquer des films dont les comportements sont ajustés en fonction de leur utilisation. La technique selon l'invention est alors toute indiquée pour permettre la meilleure adéquation possible entre la performance désirée et la performance obtenue.

L'ionomère sous forme de poudre obtenu selon l'invention peut être déposé sur un support polymérique adéquat par des techniques connues de dépôt des poudres et être fondu, de préférence sans contact métallique, en particulier par rayonnement IR en formant un film, de préférence transparent, servant de couche d'usure ou de protection pour ledit support polymérique afin d'obtenir un revêtement de sols ou de murs.

L'ionomère en poudre peut être également transformé par les techniques classiques d'extrusion après neutralisation en vue de former un film, de préférence transparent, servant de couche d'usure ou de protection pour un support polymérique afin d'obtenir un revêtement de sols ou de murs. L'intérêt de cette technique réside dans le fait que l'on obtient une excellente adhérence sur le support polymérique du film résultant de l'extrusion, si le support est chauffé à une même température ou à une température proche du film ionomère à la sortie de celui-ci de l'extrudeuse.

Un intérêt supplémentaire réside dans le fait qu'il est possible de réaliser un film de protection d'ionomère très fin, de l'ordre par exemple de quelques µm, de cette manière.

Dans les deux cas précités (dépôt en poudre ou extrusion - couchage) sur un support polymérique, l'ionomère peut être mis en oeuvre directement sans nécessité de séchage ou de filtration préalable, contrairement aux techniques de production d'ionomères selon les techniques antérieures.

De plus, contrairement à ce à quoi on aurait pu s'attendre compte tenu des difficultés de mise en oeuvre par extrusion des ionomères classiques, on constate que le type d'ionomères selon l'invention se comporte très bien, c'est-à-dire sans les difficultés habituelles liées à la surchauffe, à la viscosité, au dégazage ou à la corrosion. On peut ainsi utiliser les extrudeuses classiques pour la production de revêtements de sols ou de murs.

Les aspects techniques de mise en oeuvre de l'ionomère ne diffèrent pas sensiblement des techniques connues pour la réalisation de "dry-blends" ou "dry-mix" de PVC souple.

Le malaxage a pour but d'obtenir un mélange se présentant sous la forme d'une poudre sèche (dry-mix).

Les "dry-mix" peuvent être préparés dans des mélangeurs à double cuve (Henschel ®, Papenmeier ®, M.T.I. ®, etc.). La cuve supérieure est à double paroi.

La cuve à double paroi dans le cas du PVC est prévue pour permettre un chauffage. Dans le cas des ionomères, le chauffage de la cuve n'est habituellement pas nécessaire, car généralement les poudres utilisées généralement ont des points de fusion relativement bas (80 - 90 °C) et un échauffement risquerait de provoquer l'agglomération; la double paroi peut cependant servir pour refroidir ou contrôler la température de malaxage et éviter un échauffement trop important par friction.

Le mélange est transvasé mécaniquement dans une deuxième cuve (cuve inférieure). Cette deuxième cuve de malaxage, à double paroi également, est refroidie. Elle a, en général, une capacité quadruple de celle de la première, de façon à permettre un refroidissement rapide de la matière, si nécessaire.

Ces malaxeurs travaillent à vitesse rapide (3000 t/m), à cycle court (10 à 15 min). Ils ont des capacités de mélange s'étalant de 50 à 500 kg de mélange.

Pour des capacités plus importantes (charges unitaires de 2000 kg, par exemple), on utilise des malaxeurs chauffants à vitesse lente. Les plus employés sont les mélangeurs horizontaux, les outils de mélange étant constitués par des palettes ou des vis à bande hélicoïdale (type Ribon Blender).

La transformation des poudres d'ionomères peut s'effectuer par diverses techniques d'extrusion, d'extrusion-couchage et d'autres procédés d'extrusion. Divers équipements connus conviennent à cet égard.

On peut citer les extrudeuses double-vis, habituellement préconisées pour l'extrusion des "dry-mix" de PVC (vis cylindriques ou vis coniques) à thermorégulation et les extrudeuses multivis.

La technique d'extrusion-couchage, encore également appelée extrusion-lamination, décrite en référence à la figure 1, repose sur l'extrusion des poudres d'ionomères sur une extrudeuse 1 alimentée en poudre d'ionomère produite selon l'invention et équipée d'une filière plate 2 d'une longueur de 1.5 à 2 mètres) et fixée sur la tête d'extrudeuse, en prolongement de l'axe de la boudineuse (et non perpendiculairement) de façon à permettre le déroulement du support 3 sous la filière. Ce support est avantageusement préalablement chauffé à la température du film à sa sortie de la tête d'extrusion.

La pellicule d'ionomère et le support sont solidarisés sous pression dans un laminoir 4. Le calibrage de la pellicule se fait à la fois au niveau de la filière plate 2 et du laminoir 4. Toutefois, l'épaisseur définitive de la couche est déterminée par la vitesse de tirage du laminoir. La bande est aussitôt refroidie et ensuite enroulée au poste 6.

Un support classique décoré et présentant éventuellement un relief tel que ceux utilisés pour le revêtement de sol et/ou de mur peut ainsi recevoir un revêtement d'ionomère préparé selon la technique proposée par l'invention.

L'invention sera décrite plus en détail en référence à des formes d'exécution préférées données à titre d'exemple sans caractère limitatif.

### Exemple 1 : neutralisation en dry-blend.

Dans un mélangeur rapide de type PRODEX, une solution de neutralisation proche de la saturation est incorporée progressivement à une poudre de précurseur.

A la fin de l'addition, le mélange est brassé jusqu'à obtention d'une poudre d'aspect sec (entre 5 et 30 minutes). Cette poudre est enduite sur papier release, prégélifiée et fusionnée dans un four ISOTEX à 190 °C pendant 3 minutes.

Les tableaux suivants montrent que la variation des solutions de neutralisation en concentration et type de base permet de modifier le taux de neutralisation et d'incorporer différents types de cations.

**Tableau 1 :**

| **Influence de la concentration.** | | | | |
|---|---|---|---|---|
| Volume de H₂O | 0 | 100 cc | 90 cc | 110 cc |
| Masse de NaOH | 0 | 36 g | 36 g | 36 g |
| Masse de poudre | 1000 g | 1000 g | 1000 g | 1000 g |
| T° cristallisation | 57 ± 2 | 40 °C | 40 °C | 40 °C |

**Tableau 2 :**

| **Variation de la neutralisation.** | | | | |
|---|---|---|---|---|
| Volume de H₂O | 0 | 100 cc | 100 cc | 100 cc |
| Masse de NaOH | 0 | 18 g | 26 g | 36 g |
| Masse de poudre | 1000 g | 1000 g | 1000 g | 1000 g |
| T° cristallisation | 57,76°C | 49, 68°C | 44,19°C | 40 °C |

**Tableau 3 :**

| **Neutralisation Na et Zn.** | | | | |
|---|---|---|---|---|
| Volume de H₂O | 100 cc | 100 cc | 100 cc | 100 cc |
| Masse de NaOH | 36 g | 36 g | 29 g | 29 g |
| Masse de ZnO | 2 g | 4 g | 2 g | 4 g |
| Masse de poudre | 1000 g | 1000 g | 1000 g | 1000 g |
| T° cristallisation | 41 °C | 40 °C | 45 °C | 40 °C |

**Tableau 4 :**

| **Neutralisation d'un autre précurseur Escomer M504 d'Exxon** | | | |
|---|---|---|---|
| Volume de H₂O | 0 | 35 cc | 58 cc |
| Masse de NaOH | 0 | 12.5 g | 21 g |
| Masse de poudre M 504 | 1000 g | 1000 g | 1000 g |
| T° cristallisation | 53,90°C | 51,17°C | 39.28°C |

**Tableau 5 :**

| **Neutralisation au silicate de sodium** | | | |
|---|---|---|---|
| Volume d'eau (ml) | --- | 60 | --- |
| Masse de NaOH(g) | --- | 26 | --- |
| Masse de silicate (g)* | --- | --- | 157 |
| Masse de poudre(g) | 1000 | 1000 | 1000 |
| T° cristallisation(°C) | 63.04 | 54.19 | 55.17 |

| | | | |
|---|---|---|---|
| (*) Silicate de sodium : 27 % SiO₂ dans NaOH 14 % | | | |

### Exemple 2 : transformation de la poudre par fusion

On neutralise 1 kg d'Escomer A 404 (Exxon) au moyen d'une solution de 26 g d'hydroxyde de sodium dans 60 ml d'eau suivant le procédé décrit dans l'exemple 1.

La poudre blanche obtenue est un ionomère de sodium neutralisé à 30%. Cette poudre est tamisée et mélangée avec 0.5% de Néosyl TS (Crosfield). Elle est ensuite enduite à la racle sur un film calandré à base de résines EVA dont la composition est formulée comme suit :

| | |
|---|---|
| EVA | 350 |
| craie | 250 |
| pigment | 14 |
| lubrifiant | 13 |

Le dépôt est légèrement aggloméré par passage sous des lampes IR et fondu dans un four à air chaud pulsé (ISOTEX) à 190 °C pendant 3 minutes.

Le tableau donne le poids et l'épaisseur de la couche d'usure obtenue en fonction de l'ouverture de la racle et de la granulométrie.

Le film est transparent; il ne présente pas de défaut lorsque le poids déposé est :
- > 250g pour une poudre tamisée à 250 µ
- > 250g pour une poudre tamisée à 315 µ
- > 230g pour une poudre tamisée à 450 µ

**Tableau 6 :**

| Poids et épaisseur de film en fonction de la granulométrie | | | | | | |
|---|---|---|---|---|---|---|
| Ouverture de racle (mm) | Poudre tamisée < | | | | | |
| | 250 µ | | 315 µ | | 450 µ | |
| | poids (g/m²) | épaisseur (mm) | poids (g/m²) | épaisseur (mm) | poids (g/m²) | épaisseur (mm) |
| 0.4 | 92 | - | - | - | - | - |
| 0.5 | 197 | 0.17 | 182 | 0.16 | - | - |
| 0.6 | 187 | 0.17 | 154 | 0.17 | 168 | 0.15 |
| 0.7 | 221 | 0.20 | 233 | 0.20 | 232 | 0.19 |
| 0.8 | 280 | 0.25 | 270 | 0.25 | 276 | 0.25 |
| 0.9 | - | - | 274 | 0.28 | 267 | 0.28 |
| 1.0 | - | - | - | - | 320 | 0.32 |

### Exemple 3 : extrusion de l'ionomère

On neutralise 20 kg d'Escomer M 5404 (Exxon) au moyen d'une solution de 1070.5 g d'hydroxyde de sodium dans 3 litres d'eau suivant le procédé décrit dans l'exemple 1.

La poudre blanche obtenue est un ionomère de sodium neutralisé à 75%.

Cette poudre est introduite dans la trémie d'alimentation d'une extrudeuse bivis MAPRE munie d'une filière plate dont l'ouverture des lèvres est réglée à 0.3 mm.

La vitesse de rotation de vis est de 70 t/m. La matière est extrudée en dégazant dans les conditions de température suivantes :
- température de vis :120 °C
- température de collier :180 °C
- température de corps :
   zone 1 : 185 °C
   zone 2 : 210 °C
   zone 3 : 220 °C
   zone 4 : 215 °C
   zone 5 : 200 °C
- température de la filière : zone 1 à 5 : 215-220 °C

A la sortie de la filière, le film est refroidi sur cylindre et enroulé. Le film obtenu a une épaisseur de 0.2 mm et est parfaitement transparent.

Malgré le contenu élevé de la poudre en eau, le film ne présente pas de bulles.

## Revendications

1. Procédé de préparation d'ionomères en poudre comportant la neutralisation d'un précurseur en poudre insoluble en milieu aqueux par un agent de neutralisation, caractérisé en ce que la neutralisation s'effectue en ajoutant de manière dosée une quantité définie de solution d'agent de neutralisation dans un mélangeur rapide en conservant essentiellement le caractère de poudre sèche, selon la technique dite du Dry-Blend.

2. Procédé selon la revendications 1, caractérisé en ce que les solutions de neutralisation utilisées sont obtenues par dissolution d'un sel, ou de préférence d'une base ou d'un oxyde métallique.

3. Procédé selon les revendications 1 ou 2, caractérisé en ce que la poudre obtenue contient une teneur en eau de l'ordre de 10%, agissant comme élément fluidifiant et réduisant les risques d'explosion.

4. Utilisation des poudres d'ionomères obtenues par le procédé selon l'une quelconque des revendications précédentes, pour la réalisation de couches d'usure de revêtements de sols.

5. Utilisation selon la revendication 4, caractérisée en ce que la poudre d'ionomères obtenue est déposée sur un support polymérique par les techniques classiques de dépôt de poudre et est fondue sans contact métallique, en formant un film servant de couche d'usure sur ledit support, afin d'obtenir un produit de revêtement de sols ou de murs.

6. Utilisation selon la revendication 5, caractérisée en ce que le dépôt de poudre est fondu par rayonnement infrarouge.

7. Utilisation selon la revendication 4, caractérisée en ce que la poudre d'ionomères est soumise à une extrusion après la neutralisation, en vue de former un film qui est appliqué à chaud sur un support polymérique afin d'obtenir un produit de revêtement de sols ou de murs.

8. Utilisation selon l'une quelconque des revendications 4 à 7, caractérisée en ce que la couche d'usure est transparente.

9. Utilisation selon l'une quelconque des revendications 4 à 8, caractérisée en ce que l'on utilise un ionomère résultant d'une neutralisation par plusieurs types de cations.

10. Utilisation selon l'une quelconque des revendications 4 à 9, caractérisée en ce que l'on utilise un ionomère comportant des additifs formés dans l'ionomère par l'anion de l'agent de neutralisation.

## Patentansprüche

1. Verfahren zur Herstellung von pulverförmigen Ionomeren, umfassend die Neutralisation eines in wässerigem Milieu unlöslichen, pulverförmigen Vorläufers durch ein Neutralisationsmittel, dadurch gekennzeichnet, daß die Neutralisation gemäß der sogenannten Dry-Blend-Technik durch dosierte Zugabe einer definierten Menge von Neutralisationsmittellösung in einem Schnellmischer erfolgt, wobei im wesentlichen das Merkmal eines trockenen Pulvers erhalten bleibt.

2. Verfahren gemäß Anspruch 1, dadurch gekennzeichnet, daß die verwendeten Neutralisationslösungen durch Auflösung eines Salzes, oder vorzugsweise einer Base oder eines Metalloxids erhalten werden.

3. Verfahren gemäß Anspruch 1 oder 2, dadurch gekennzeichnet, daß das erhaltene Pulver einen Wassergehalt von ungefähr 10% hat, der als Verflüssigungselement wirkt und die Explosionsrisiken vermindert.

4. Verwendung der nach dem Verfahren gemäß irgendeinem der vorhergehenden Ansprüche erhaltenen Ionomerpulver zur Verwirklichung von Verschleißschichten für Bodenbeläge.

5. Verwendung gemäß Anspruch 4, dadurch gekennzeichnet, daß das erhaltene Ionomerpulver nach den herkömmlichen Pulveraufbringungstechniken auf eine polymere Unterlage aufgebracht wird und ohne metallischen Kontakt geschmolzen wird, wobei ein Film gebildet wird, der als Verschleißschicht auf der Unterlage dient, um ein Bodenbelag- oder Wandbelagprodukt zu erhalten.

6. Verwendung gemäß Anspruch 5, dadurch gekennzeichnet, daß das aufgebrachte Pulver durch Infrarotstrahlung geschmolzen wird.

7. Verwendung gemäß Anspruch 4, dadurch gekennzeichnet, daß das Ionomerpulver nach der Neutralisation einer Extrusion unterworfen wird, um einen Film zu bilden, der auf eine polymere Unterlage heiß aufgebracht wird, um ein Bodenbelag- oder Wandbelagprodukt zu erhalten.

8. Verwendung gemäß irgendeinem der Ansprüche 4 bis 7, dadurch gekennzeichnet, daß die Verschleißschicht durchsichtig ist.

9. Verwendung gemäß irgendeinem der Ansprüche 4 bis 8, dadurch gekennzeichnet, daß ein Ionomer verwendet wird, das sich aus einer Neutralisation durch mehrere Arten von Kationen ergibt.

10. Verwendung gemäß irgendeinem der Ansprüche 4 bis 9, dadurch gekennzeichnet, daß ein Ionomer verwendet wird, das in dem Ionomer durch das Anion des Neutralisationsmittels gebildete Additive umfaßt.

## Claims

1. Process for producing powder ionomers comprising neutralizing a powder precursor insoluble in aqueous media with a neutralizing agent, characterized in that the neutralization is carried out by adding by dose a defined quantity of a neutralizing agent solution into a fast speed mixer while keeping the dry powder character, according to the so-called Dry-Blend technique.

2. Process according to claim 1, characterized in that the neutralizing solutions are obtained through dissolution of a salt, preferably a base or a metal oxide.

3. Process according to claim 1 or 2, characterized in that the resulting powder contains a water content of about 10% acting as a fluidizing element and reducing the explosion risks.

4. Use of ionomer powders obtained by the process according to any of preceding claims to produce wear layers for floor coatings.

5. Use according to claim 4, characterized in that the ionomer powder is laid on a polymer backing with conventional powder depositing techniques and is melted without any metallic contact by forming a film serving as wear layer on said backing so as to obtain a product for coating floors or walls.

6. Use according to claim 5, characterized in that the powder deposit is melted with an infrared radiation.

7. Use according to claim 4, characterized in that the ionomer powder is subjected to an extrusion after neutralization so as to do form a film being hot applied on a polymer backing so as to obtain a product for coating floors or walls.

8. Use according to any of claims 4 to 7, characterized in that the wear layer is transparent.

9. Use according to any of claims 4 to 8, characterized in that a ionomer is used resulting from a neutralization with various cation types.

10. Use according to any of claims 4 to 9, characterized in that a ionomer is used comprising additives formed in the ionomer by the neutralizing agent anion.
